Europäisches Patentamt

(19) European Patent Office

Office européen des brevets

(11) Numéro de publication : **0 218 485**
**B1**

(12) **FASCICULE DE BREVET EUROPÉEN**

(51) Int. Cl.⁴ : **G 21 C 17/08**, G 21 C 19/20

(45) Date de publication du fascicule du brevet :
**20.09.89**

(21) Numéro de dépôt : **86401326.3**

(22) Date de dépôt : **17.06.86**

(54) **Dispositif de manutention pour introduire et extraire un appareillage à travers un orifice d'une enceinte étanche.**

(30) Priorité : **11.07.85 FR 8510673**

(43) Date de publication de la demande :
**15.04.87 Bulletin 87/16**

(45) Mention de la délivrance du brevet :
**20.09.89 Bulletin 89/38**

(84) Etats contractants désignés :
**BE DE GB IT NL**

(56) Documents cités :
**EP–A– 0 147 944**
**DE–A– 1 964 496**
**FR–A– 1 475 913**

(73) Titulaire : **NOVATOME**
**La Boursidière R.N. 186**
**F-92357 Le Plessis Robinson (FR)**

㏞ Inventeur : **Limouzin, Dominique**
**74 rue Cuvier**
**F-69006 Lyon (FR)**
Inventeur : **Martin, Eric**
**8 rue Salvator Allendé**
**F-69100 Villeurbanne (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention concerne un dispositif de manutention pour introduire et extraire un équipement à travers un orifice d'une enceinte étanche, en utilisant un moyen de manutention classique tel qu'un treuil et en maintenant, pendant toutes les phases de la manutention, une étanchéité satisfaisante de l'enceinte.

Les réacteurs nucléaires à neutrons rapides comportent généralement une cuve de grande dimensions contenant le coeur du réacteur immergé dans un sodium liquide. La cuve du réacteur est fermée à sa partie supérieure par une dalle de grande épaisseur en béton assurant la protection biologique de la zone du réacteur situé au-dessus de la cuve et la fermeture étanche de cette cuve. Le sodium liquide dans lequel plonge le coeur du réacteur remplit la cuve jusqu'à un certain niveau, l'espace compris entre ce niveau supérieur du sodium et la dalle étant rempli par un gaz inerte tel que l'argon.

La dalle est percée d'ouvertures permettant le passage étanche de divers composants et porte un ensemble de bouchons tournants supportant eux-mêmes une machine de transfert placée à la verticale du coeur, pour effectuer la manutention des assemblages combustibles du coeur, pendant les opérations de rechargement de ce coeur. On prévoit sur la machine de transfert ou sur le bouchon tournant supportant cette machine, des passages ou puits de traversée permettant d'introduire des équipements tel que des équipements de contrôle, au voisinage de la machine de chargement. On a par exemple envisagé d'introduire dans le réacteur, des équipements de visualisation tels que des périscopes ou des endoscopes pour contrôler les opérations de manutention des assemblages combustibles. Il est également nécessaire d'effectuer des prélèvements ou des mesures en introduisant des dispositifs appropriés dans le réacteur. Dans tous les cas, les passages de traversée de la dalle, de ces bouchons ou de la partie supérieure de la machine de chargement, réservés aux équipements de contrôle doivent être fermés de façon étanche aussi bien lorsque l'équipement est en place dans le réacteur nucléaire que lors des phases de fonctionnement du réacteur où les appareils de contrôle ne sont pas utilisés. A cette fin, les passages de traversée sont fermés par des bouchons et comportent des moyens de verrouillage et d'étanchéité permettant une fixation étanche du bouchon dans le passage de traversée. Les bouchons de fermeture sont en effet, bien évidemment amovibles et doivent pouvoir être démontés et remis en place lors de l'introduction ou de l'extraction de l'appareillage correspondant. Pour effectuer ces opérations de mise en place ou de récupération des appareillages accompagnées d'un démontage ou d'une remise en place du bouchon, on utilisait jusqu'ici des hottes munies d'un système de vannes jouant le rôle de sas pendant les opérations de manutention. Ces hottes comportant des moyens de pompage, des moyens d'isolation et des moyens de manutention incorporés sont des matériels coûteux, compliqués et encombrants ; leur mise en place sur la dalle du réacteur mobilise des moyens importants et nécessite des durées d'intervention relativement longues.

On connaît également par le FR-A-1 475 913 un dispositif de support d'une lampe d'éclairage dans une enceinte étanche à l'intérieur de laquelle on manipule des produits radio-actifs. La lampe peut être mise en place dans l'enceinte grâce à un ensemble comportant un piston monté mobile et étanche dans un cylindre traversant la paroi de l'enceinte. Un tel dispositif monté à l'intérieur de la paroi de l'enceinte ne pourrait pas être utilisé pour l'introduction ou l'extraction d'appareillages de grande longueur tels que des équipements de visualisation, dans un orifice d'une enceinte étanche dont la fermeture est assurée par un bouchon.

Le but de l'invention est donc de proposer un dispositif de manutention pour introduire et extraire un appareillage à travers un orifice d'une enceinte étanche comportant un moyen de manutention classique, tel qu'un treuil associé à un ensemble d'introduction destiné à coopérer avec un passage cylindrique traversant la paroi de l'enceinte au niveau de l'orifice, qui est obturé par un bouchon cylindrique coopérant avec un moyen de fermeture étanche du passage cylindrique, manoeuvrable pour l'ouverture de l'orifice, le dispositif comportant de plus un piston monté mobile et étanche à l'intérieur d'un cylindre pour réaliser l'introduction et l'extraction de l'appareillage, ce dispositif de structure simple, peu coûteux ·et peu encombrant permettant de réaliser des opérations de manutention à travers la paroi de l'enceinte étanche de façon simple et rapide et sans nécessiter d'autres moyens de manutention ou de levage que ceux qui sont habituellement associé à l'exploitation d'une installation industrielle.

Dans ce but, l'ensemble d'introduction comporte :

le cylindre constitué par un tube dont le diamètre intérieur est supérieur au diamètre du passage de traversée et dont la surface interne est soigneusement usinée et calibrée, comportant à l'une de ses extrémités, ou extrémité de sortie, des moyens de liaison permettant de relier l'extrémité de sortie du tube à l'extrémité d'entrée du passage de traversée,

le piston comportant à son extrémité dirigée vers l'extrémité d'entrée du tube un organe de liaison au moyen de manutention et à son autre extrémité un second organe de liaison, pour la fixation de l'appareillage sur le piston,

et l'appareillage lui-même ayant une enveloppe externe cylindrique dont le diamètre est inférieur à celui du bouchon dans sa partie courante, une partie d'extrémité élargie et un moyen d'accrochage de l'extrémité externe du bouchon, à son extrémité opposée au piston, l'accrochage du bouchon à l'extrémité de l'appareillage permettant son déverrouillage et son introduction dans l'enceinte étanche avec l'appareillage, la partie de jonction entre la partie d'extrémité élargie de l'appareillage et son enveloppe constituant une portée d'appui tronconique destinée à coopérer avec une portée de support correspondante dans le passage, lorsque l'appareillage est mis en position de service dans l'enceinte étanche, une partie calibrée et rectifiée de la surface externe de l'appareillage coopérant alors avec les joints d'étanchéité du passage, pour procurer une fermeture étanche du passage dans la position de service de l'appareillage.

Afin de bien faire comprendre l'invention, on va maintenant décrire à titre d'exemple non limitatif, en se référant aux figures jointes en annexe, un mode de réalisation d'un dispositif de manutention suivant l'invention utilisable pour introduire et extraire un dispositif de visualisation dans la cuve d'un réacteur nucléaire à neutrons rapides.

Dans ces figures :

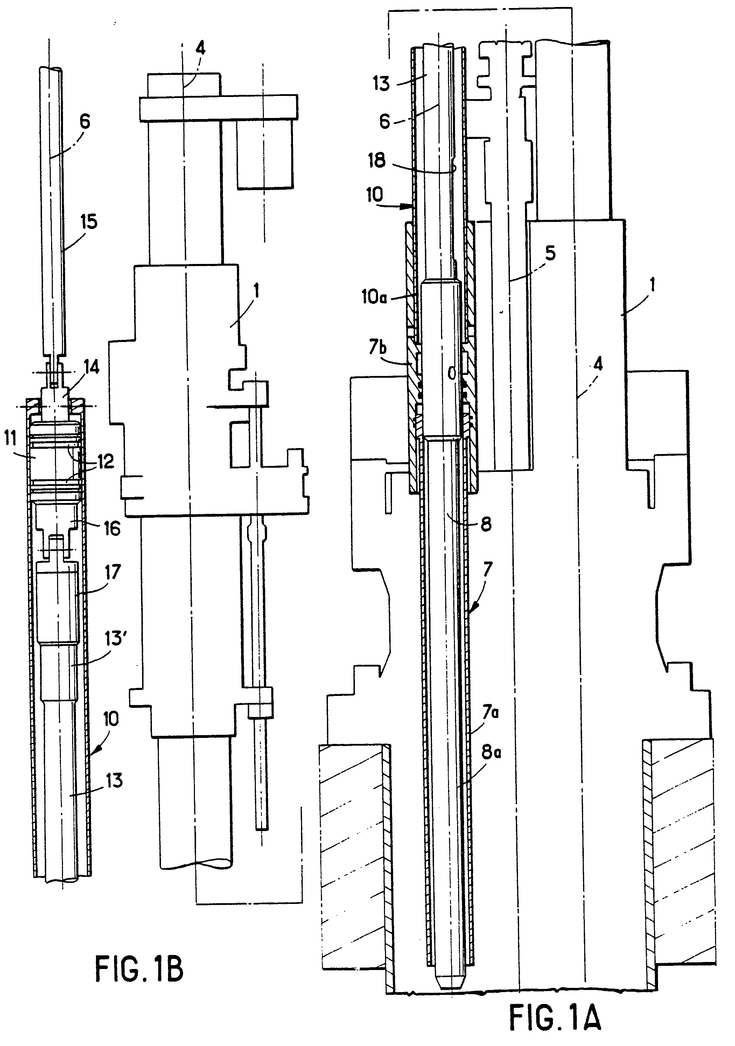

les Fig. 1a et 1b sont des vues de coupe par un plan vertical du dispositif de manutention en position de service sur la dalle du réacteur nucléaire.

La Fig. 1a est relative à la partie inférieure du dispositif de manutention.

La Fig. 1b est relative à la partie supérieure du dispositif de manutention.

La Fig. 2 est une vue en coupe par un plan vertical d'un bouchon de fermeture d'un passage de traversée de la dalle du réacteur nucléaire.

La Fig. 2a est une vue suivant A de la Fig. 2.

La Fig. 3 est une vue en coupe par un plan vertical d'une partie du dispositif de manutention comportant le piston et ses organes de liaison.

Les Fig. 4a, 4b, 4c, 4d, 4e et 4f sont des vues schématiques montrant le déroulement d'une opération de manutention permettant d'introduire un périscope d'observation des têtes d'assemblages, dans un réacteur nucléaire à neutrons rapides.

La Fig. 5 est une vue en coupe de la partie supérieure du périscope en position de service dans la cuve du réacteur nucléaire.

Sur les Fig. 1a et 1b, on voit la machine de chargement 1 d'un réacteur nucléaire à neutron rapides qui est montée mobile en rotation autour d'un axe vertical sur le petit bouchon tournant 2 du réacteur nucléaire lui-même monté rotatif autour d'un axe vertical sur le grand bouchon tournant reposant sur la dalle du réacteur. Les axes de rotation du grand bouchon tournant, du petit bouchon tournant et de la machine de chargement sont des axes verticaux différents, si bien que le bras vertical de la machine de transfert désaxé par rapport à l'axe de rotation de cette machine de transfert peut être placé à la verticale de toute position d'assemblages du coeur, en choisissant les positions angulaires du grand bouchon tournant, du petit bouchon tournant et de la machine de transfert.

On a donc représenté sur la Fig. 1a, l'axe 4 du bras de transfert et l'axe de rotation 5 de la machine de transfert 1.

Le dispositif de manutention suivant l'invention est monté sur la machine de transfert, suivant un troisième axe vertical 6 sensiblement symétrique de l'axe 4 du bras de transfert par rapport à l'axe de rotation 5 de la machine de transfert 1. La machine de traversée comporte un passage cylindrique vertical 7 constitué par un tube de traversée 7a et par une manchette supérieure d'assemblage et d'étanchéité 7b.

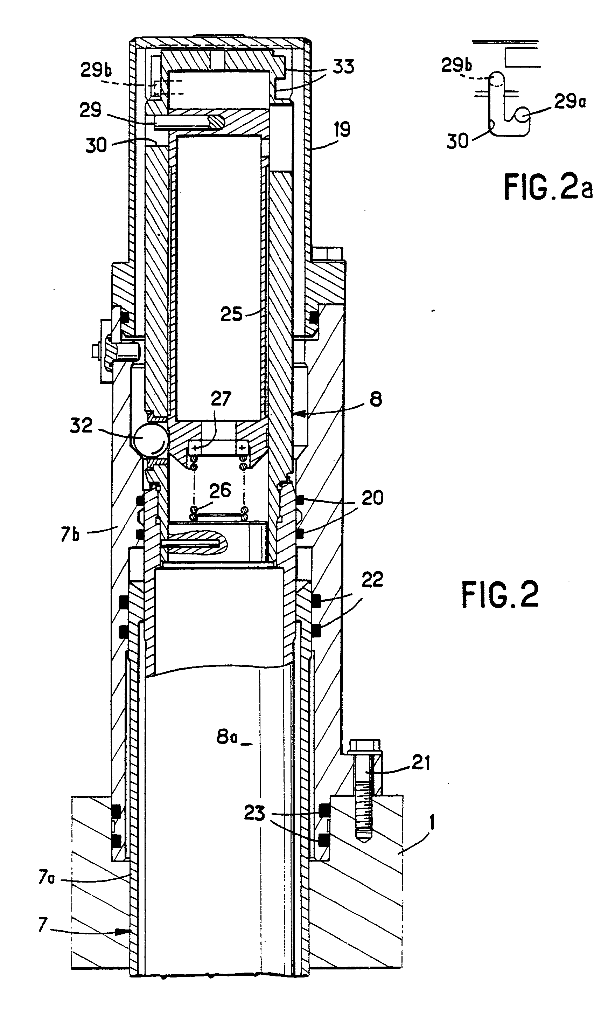

Le passage cylindrique 7 constitue un puits faisant communiquer le volume intérieur du réacteur en-dessous de la dalle 2, avec l'extérieur au-dessus de cette dalle. Le passage 7 est normalement fermé par un bouchon 8 qui sera décrit plus en détail en se référant à la Fig. 2.

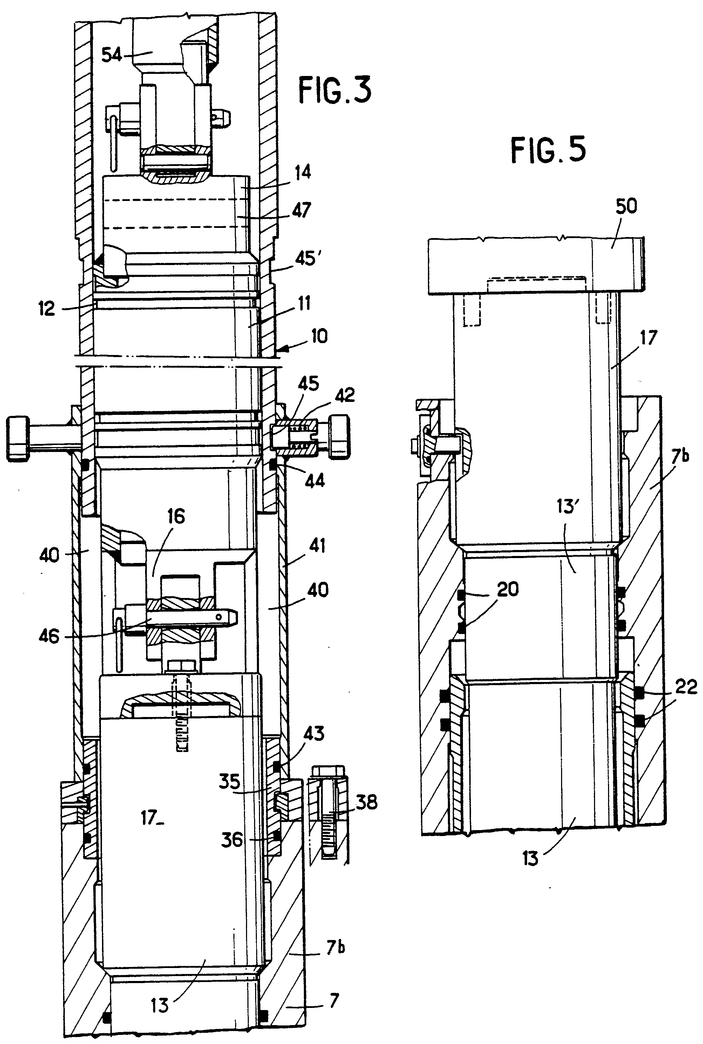

Comme il est visible sur la Fig. 1a, la manchette supérieure 7b permet de venir fixer d'une manière étanche ainsi qu'il sera expliqué plus en détail en se référant à la Fig. 3, la partie inférieure 10a du tube du dispositif de manutention. Le tube 10 a un diamètre intérieur supérieur au diamètre courant du passage 7.

En se référant aux Fig. 1a et 1b, on voit les principaux éléments du dispositif de manutention dans leur position correspondant à la mise en place du dispositif avant l'introduction d'un moyen de visualisation dans l'enceinte du réacteur. Le tube 10 a été mis en position sur la manchette 7b à l'extrémité du passage 7 et relié à cette manchette de façon étanche. Le tube 10 renferme, de haut en bas, un piston 11 et le dispositif de visualisation 13 constitué par un périscope de grande longueur, comportant un moyen de protection biologique interne permettant d'arrêter le rayonnement du réacteur.

Le piston 11 est monté mobile suivant la direction de l'axe 6, de façon étanche, à l'intérieur du tube 10, grâce à des segments d'étanchéité 12. Le piston 11 comporte à son extrémité supérieure, un moyen de liaison 14 constitué par une chape qui peut être reliée avec un axe d'articulation horizontal à la partie inférieure d'une tige de liaison 15 dont la partie supérieure est reliée au pont de manutention du réacteur nucléaire.

La partie inférieure 16 du piston 11 constitue une chape de liaison à axe horizontal du piston avec la partie supérieure 17 du périscope 13. Le périscope 13 comporte une partie courante constituée par une enveloppe cylindrique dont le diamètre est inférieur au diamètre intérieur du tube 10 et qui présente une ouverture 18 à sa partie inférieure constituant la fenêtre d'observation du périscope. La partie supérieure 17 du périscope constituant la chape de liaison au piston 11 a un diamètre supérieur au diamètre de la partie courante, ce diamètre étant toutefois sensiblement inférieur au diamètre intérieur du tube 10. Cette partie 17 est reliée à la partie courante du tube du périscope par l'intermédiaire d'une portée tronconique d'appui, de la façon décrite en référence à la Fig. 5.

En dessous de la partie élargie 17, l'enveloppe du périscope 13 comporte une partie 13' soigneusement calibrée et rectifiée destinée à coopérer avec les joints 20 pour assurer l'étanchéité dans le passage 7.

La partie inférieure de l'enveloppe tubulaire du périscope 13 constitue un moyen de liaison amovible à la partie supérieure du bouchon 8.

La surface intérieure du tube 10 soigneusement calibrée et rectifiée constitue une chambre analogue à une chambre de vérin pour le guidage du piston étanche 11 lors de ses déplacements suivant la direction de l'axe 6.

On voit que l'ensemble constitué par la tige 15, le piston 11, le périscope 13 et le bouchon 8 peut être déplacé dans la direction de l'axe 6, de façon parfaitement guidée, grâce au pont du réacteur nucléaire ou grâce à un palan suspendu au-dessus de la machine de transfert 1.

En se référant à la Fig. 2, on voit la partie supérieure du passage de traversée 7 de la machine de transfert 1 renfermant le bouchon de fermeture 8 et fermée à sa partie supérieure par une cloche de fermeture 19 fixée de façon étanche sur la manchette 7b constituant la partie supérieure du passage 7. Le bouchon 8 comporte une partie inférieure tubulaire 8a dont seule la partie supérieure a été représentée sur la Fig. 2 et une partie supérieure en plusieurs parties assurant la fixation et l'étanchéité du bouchon 8 à l'intérieur de la manchette 7b. La partie inférieure 8a du bouchon 8, comme il est visible sur la Fig. 1a, a une longueur supérieure à l'épaisseur de la dalle 2 lui permettant d'occuper toute la longueur du passage 7 depuis la surface inférieure de la dalle 2 jusqu'à la manchette supérieure 7b fixée sur la machine de transfert 1. La manchette 7b est fixée sur la machine de transfert 1 par l'intermédiaire de vis 21 et comporte des joints 22 et 23 permettant de réaliser une jonction étanche avec la partie tubulaire 7a du passage 7 et avec la machine de transfert respectivement. La manchette 7b comporte également un jeu de joints d'étanchéité 20 permettant de réaliser l'étanchéité entre la tête du bouchon 8 et le passage 7. Le bouchon 8 permet ainsi de fermer de façon étanche le passage 7 à sa partie supérieure et d'éviter les courants de convection dans ce passage. Le bouchon 8 renferme de plus dans sa partie correspondant à la traversée de la dalle 2 du réacteur, des masses métalliques fixées sur une tige de direction axiale assurant la fermeture du bouchon à sa partie inférieure et permettant la constitution d'un écran pour assurer la protection biologique à la verticale du puits de passage du dispositif de visualisation.

La partie supérieure du bouchon 8 comporte les moyens permettant de le maintenir à l'intérieur de la manchette 7b du passage 7. Ces moyens comportent un piston 25 monté mobile axialement et en rotation à l'intérieur de la partie supérieur du bouchon 8. Le piston est rappelé en position haute par un ressort 26 en appui sur une butée à bille 27. A sa partie supérieure, le piston 25 est solidaire d'un doigt 29 dont l'extrémité est en prise avec une lumière 30 traversant l'enveloppe du bouchon et dont la forme est visible sur la Fig. 2a. Dans la position représentée sur les Fig. 2 et 2a, le piston 25 est maintenu dans une position telle qu'il repousse vers l'extérieur un jeu de billes d'appui 32 reposant sur une portée cônique d'appui de la manchette 7b du passage 7. Par un mouvement combiné de translation et de rotation du bouchon 8 par rapport au piston 25, on peut faire passer le doigt 29 de sa position 29a représentée sur la Fig. 2a à la position 29b, en permettant ainsi au piston d'effectuer un déplacement vers le haut sous l'action du ressort 26 et de libérer les billes 32 qui peuvent alors se rétracter vers l'intérieur du bouchon. Le bouchon n'est plus alors verrouillé à l'intérieur de la manchette 7b et peut être alors déplacé vers le bas à l'intérieur du passage 7. Le bouchon 8 comporte également un profil externe d'assemblage 33 permettant de le relier à la partie inférieure du dispositif de manutention constitué par la base du périscope 13. Sur la Fig. 2, on a représenté le bouchon 8 dans la position qu'il occupe dans toutes les phases où le dispositif de visualisation n'est pas mis en oeuvre, par exemple pendant le fonctionnement du réacteur nucléaire. Une cloche de fermeture 19 est alors fixée sur la partie supérieure de la manchette 7b.

Sur la Fig. 3, on a représenté la partie supérieure de la manchette 7b et certains éléments du dispositif de manutention, le périscope 13 étant introduit à l'intérieur du passage 7 vers l'intérieur de la cuve du réacteur.

On voit la partie inférieure du tube 10 en appui sur la manchette 7b par l'intermédiaire d'une pièce d'appui 35 munie de joints 36 permettant de réaliser l'étanchéité entre le tube 10 et le passage 7. Des moyens de fixation 38 comportant des vis permettant d'assurer la jonction entre la base du tube 10 et la manchette 7b. Le tube 10 comporte à sa partie inférieure deux ouvertures 40 qui peuvent être fermées par un fourreau coulissant 41 munie de moyens de déplacement et d'accrochage 42 et venant en position de fermeture étanche, comme représenté sur la Fig. 3 grâce à des joints 43 et 44 portés par la partie inférieure du tube 10 de part et d'autre des ouvertures 40. Le tube 10 comporte également des rainures d'accrochage des moyens 42, dans les positions 45 et 45' correspondant respectivement à la fermeture et à l'ouverture de la base du tube 10.

Les moyens de liaison articulés 14 et 16 du piston 11 comportent chacun un axe d'assemblage et d'articulation horizontal qui peut être enlevé ou remis en place grâce à une poignée de manoeuvre et fixé en position grâce à une goupille. L'axe 46 de la pièce de liaison inférieure 16 peut être démonté ou remis en place depuis l'extérieur, lorsque le fourreau de fermeture 41 est dans sa position supérieure, ces moyens de retenue 42 étant en position dans la rainure supérieure 45'. On peut ainsi désaccoupler ou réaccoupler le piston 11 et la tête 17 du périscope 13.

Lorsque le périscope est mis en place comme représenté sur la Fig. 3, on peut le séparer du piston 11 puis démonter la base du tube 10 et le séparer de la manchette 7b grâce au pont de manutention du réacteur nucléaire.

Le périscope 13, dans sa position de service, comme représenté à la Fig. 5, repose alors que la portée tronconique d'appui des billes du bouchon, par l'intermédiaire de sa partie tronconique séparant la tête 17 du corps du périscope. La partie 13' de l'enveloppe tubulaire extérieure du périscope 13 parfaitement calibrée et rectifiée à la dimension des joints 20 de la manchette 7b permet alors de réaliser une étanchéité parfaite à la partie supérieure du puits 7, en remplacement du bouchon 8. On fixe alors une caméra de télévision 50 au-dessus de la tête 17 du périscope pour recueillir les images des têtes d'assemblages captées par le périscope 13 dont la fenêtre inférieure 18 est alors au niveau de la partie supérieure du coeur du réacteur. Le périscope 13 est utilisé lorsque le réacteur nucléaire est à l'arrêt, le sommet du coeur comportant les têtes d'assemblages étant émergé au-dessus du sodium liquide dont le niveau a été abaissé pour réaliser la manutention des assemblages.

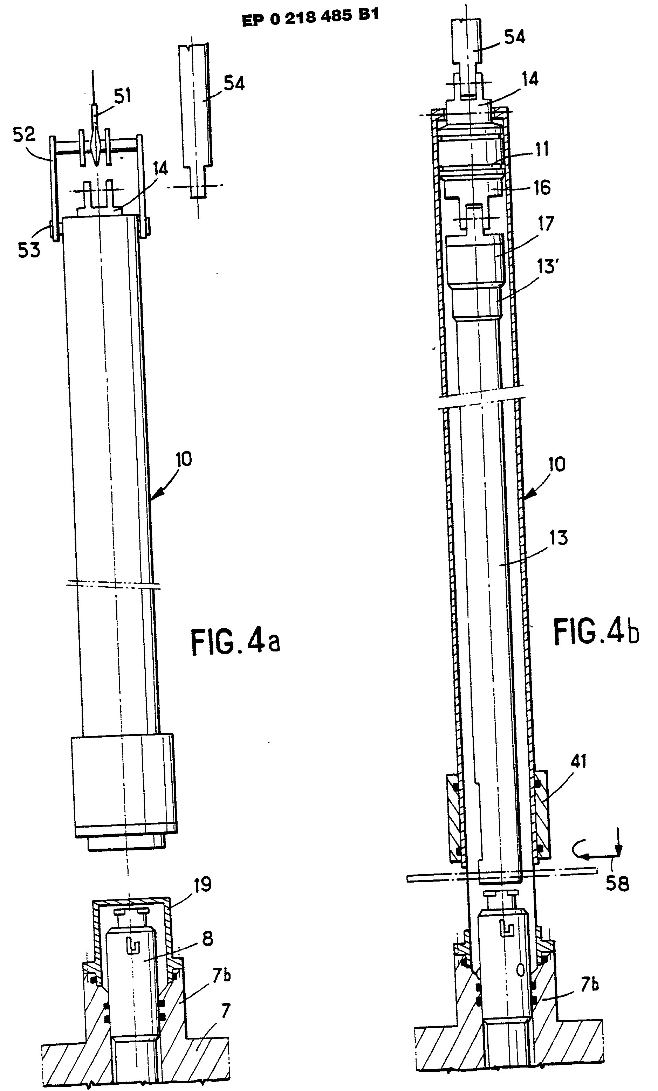

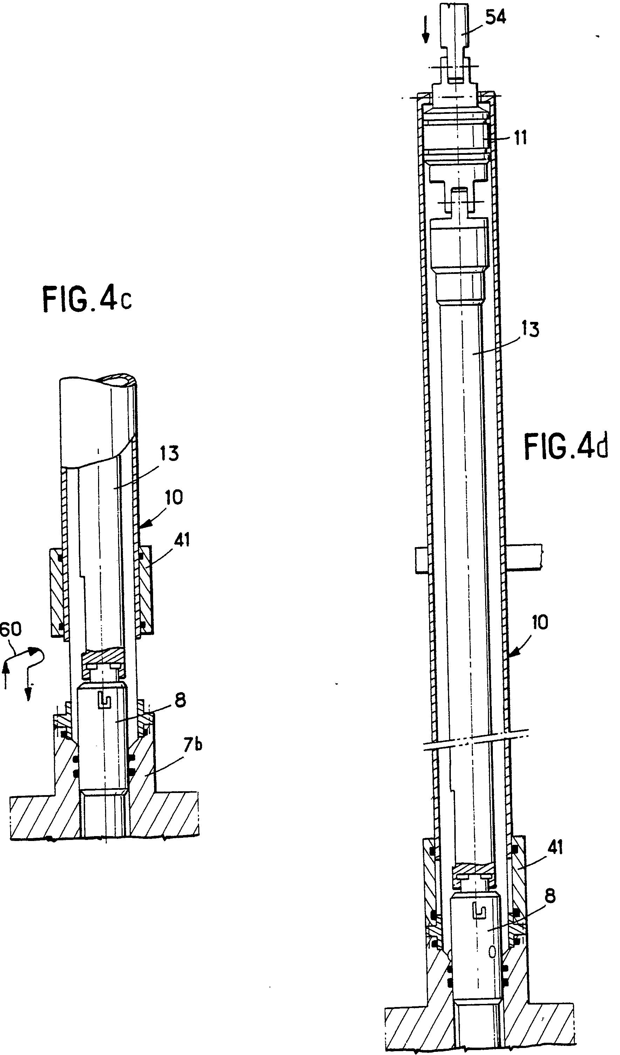

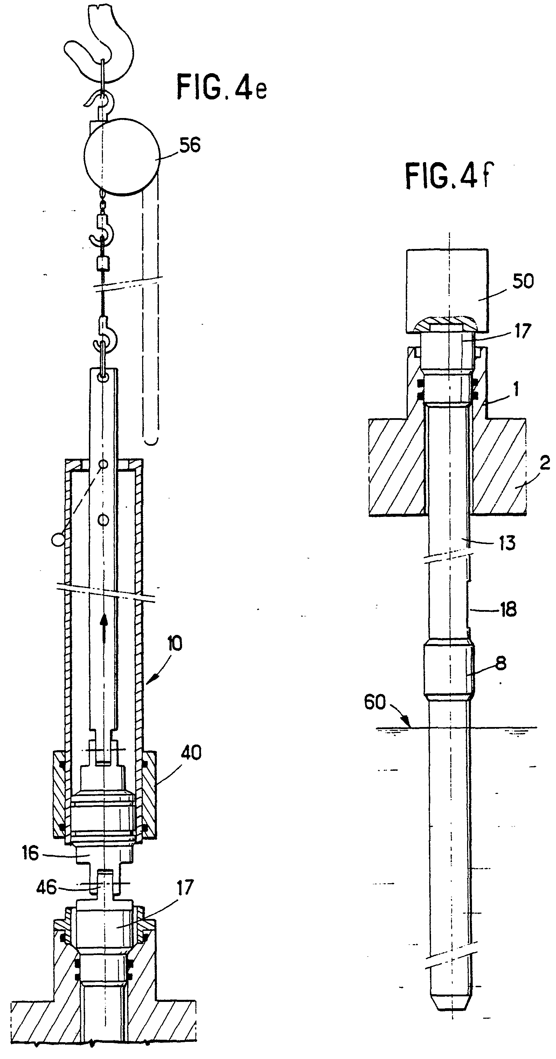

On va maintenant se reporter aux Fig. 4a, 4b, 4c, 4d, 4e et 4f, pour décrire une opération complète de mise en place du périscope dans la cuve du réacteur nucléaire, pour assurer le contrôle des manutentions d'assemblages pendant le rechargement du coeur.

Sur la Fig. 4a, on voit le bouchon 8 de fermeture du puits 7 en position de fermeture étanche à l'intérieur de la manchette 7b, comme représenté sur la Fig. 2. La partie supérieure du bouchon 8 est coiffée par la cloche de fermeture et d'étanchéité 19. Le dispositif de manutention suivant l'invention est amené à la verticale du puits 7 grâce au pont du réacteur nucléaire, la partie supérieure du tube 10 étant reliée grâce à un étrier 52 à une élingue 51 fixée au crochet du pont roulant. Le tube 10 et l'étrier 52 sont assemblés grâce à un axe 53 passant dans deux trous diamétralement opposés traversant la paroi du tube 10 et dans une ouverture 47 visible sur la Fig. 3 traversant la pièce de liaison supérieure 14 du piston 11. On réalise ainsi en même temps le verrouillage du piston 11 en position haute à l'intérieur du tube 10.

Parallèlement, on vient disposer au voisinage de la pièce de liaison 14, légèrement saillante par rapport à l'extrémité supérieure du tube 10, la partie inférieure d'une perche d'extraction 54 fixée à un palan 56 solidaire du pont roulant et visible sur la Fig. 4e. On démonte la cloche 19 pour rendre accessible l'extrémité supérieure du bouchon 8 et l'on effectue la descente du tube 10 sur l'extrémité supérieure de la manchette 7b ainsi que la fixation de ce tube sur la manchette par sa partie inférieure munie de la pièce d'appui 35.

Sur la Fig. 4b, on voit le tube 10 dont le fourreau 41 est en position d'ouverture et le périscope 13 dans leur position relative, juste avant la fixation de l'extrémité inférieure du périscope 13 sur le bouchon 8. La perche d'accrochage 54 a été reliée à la pièce de liaison 14 du piston 11 et l'étrier 52 a été démonté, si bien que le piston 11 est déverrouillé et qu'il est suspendu ainsi que le périscope 13 à la perche d'actionnement 54 elle-même reliée au palan ·56. Grâce au palan 56, le périscope 13 est descendu sur l'extrémité supérieure du bouchon 8 ; l'extrémité inférieure du périscope 13, comporte un profil intérieur correspondant au profil 33 du bouchon 8 venant assurer la jonction du dispositif de manutention avec le bouchon, par un déplacement combiné en translation et en rotation schématisé par les flèches 58. Le périscope 13 et le bouchon 8 sont alors assemblés par un système à griffes ou baïonnette assurant leur jonction.

Le bouchon 8 est alors déverrouillé, comme représenté sur la Fig. 4c, par un mouvement combiné de translation et de rotation du périscope 13 solidarisé à la tête du bouchon 8. Ce mouvement permet de remettre le piston de blocage 25 des billes 32 en position haute, le bouchon étant ainsi déverrouillé. On voit qu'alors l'ensemble du piston 11, du périscope 13 et du bouchon 8 est suspendu à la perche d'actionnement 54 fixée au palan 56. On peut remarquer, que le bouchon ne peut être déverrouillé que lorsque l'accrochage de l'extrémité du périscope 13 sur la tête de bouchon a été réalisé, la manoeuvre ultérieure de déverrouillage se faisant par l'intermédiaire du périscope relié à la tête du bouchon 8. On referme alors le fourreau 41 et l'ensemble du dispositif de manutention se trouve dans la position telle que représentée à la Fig. 4d qui correspond également à la position représentée sur les Fig. 1a et 1b. On effectue d'abord un balayage du tube 10 par du gaz neutre (celui du réacteur), puis on effectue la descente du piston et du périscope 13 jusqu'au moment où la tête du périscope vient en appui sur la portée tronconique de la manchette 7b, comme représenté sur la Fig. 3. Le piston 11 est alors dans sa position la plus basse et la partie inférieure du périscope comportant la fenêtre d'observation 18 est alors au niveau des têtes d'assemblages du coeur du réacteur nucléaire.

Comme représenté sur la Fig. 4e, on relève alors en position d'ouverture le fourreau 41 monté sur la partie inférieure 35 du tube 10, ce qui permet d'accéder à l'axe 46 de liaison entre la partie 16 du piston et la partie 17 du périscope et de séparer le piston du périscope. On supprime également la liaison entre la base 35 du tube 10 et la manchette 7b. On peut ensuite, comme représenté sur la Fig. 4e, grâce au palan 56, séparer l'ensemble constitué par le piston 11 et le tube 10 dans lequel se déplace le piston 11, de la tête du périscope.

On a représenté sur la Fig. 4f, le périscope 13 en position de service dans le réacteur nucléaire. La fenêtre d'observation 18 est au niveau des têtes d'assemblages et le bouchon 8 est fixé à l'extrémité inférieure du périscope 13 plongée en partie dans le sodium liquide dont le niveau 60 a été abaissé pour laisser les têtes d'assemblages émergées.

La caméra de télévision 50 est fixée sur la tête 17 du périscope 13 qui peut alors assurer la visualisation des opérations de manutention du combustible.

Comme il est visible sur la Fig. 5, le périscope assure alors par la partie supérieure 13' de son enveloppe externe dont le diamètre est identique au diamètre du bouchon 8 la fermeture étanche du puits 7 grâce au joint 20. De plus, le périscope 13 assure également la protection biologique grâce à un dispositif interne arrêtant le rayonnement du réacteur.

Il est bien évident que pendant toutes les opérations de mise en place du périscope, la fermeture étanche du puits 7 est assurée soit par le bouchon 8, soit par le piston 11, pendant la descente du bouchon 8 et du périscope (Fig. 4d) soit enfin par le périscope lui-même lorsqu'il est en position de service dans la cuve

Il est bien évident également que le périscope peut être extrait de la cuve du réacteur nucléaire par les opérations inverses de celles qui ont été décrites. Pendant toutes ces opérations, de même que lors de l'introduction du périscope, l'étanchéité est toujours maintenue soit par le périscope, soit par le piston 11, soit enfin par le bouchon remis en place. Au cours de ces opérations on réalise également le verrouillage du bouchon lorsqu'il est remis en place. Ce verrouillage ne peut être réalisé qu'avant la séparation du périscope et du bouchon, si bien que le bouchon ne peut retomber dans la cuve puisqu'il est soit maintenu par le dispositif de manutention soit verrouillé sur la manchette 7b.

On voit donc que le dispositif de manutention suivant l'invention permet de mettre en place et de récupérer un dispositif d'observation tel qu'un périscope dans la cuve d'un réacteur nucléaire à neutrons rapides en maintenant constamment une fermeture étanche de cette cuve et en opérant dans de très bonnes conditions de sécurité.

Le dispositif de manutention est d'autre part très simple et ne nécessite pas l'utilisation de hottes étanches munies de vannes et d'un appareil de levage spécifique. Pendant toutes les opérations de manutention, les opérateurs effectuant la manoeuvre du palan et la séparation ou la fixation des éléments du dispositif de manutention sont parfaitement protégés contre les rayonnements ou contre les émanations gazeuses en provenance de la cuve. En outre, le volume d'air à balayer et à remplir de gaz neutre est très faible.

L'invention ne se limite pas au mode de réalisation qui a été décrit. C'est ainsi qu'on peut imaginer d'autres moyens de liaison des divers éléments du dispositif de manutention et d'autres moyens de levage pour le déplacement de ces éléments. On peut par exemple simplifier la conception de la partie inférieure du tube en supprimant le fourreau mobile d'accès au moyen de liaison du piston, le montage et le démontage de la liaison inférieure du piston pouvant être réalisés en le maintenant saillant par rapport à la partie inférieure du tube.

On peut également imaginer l'utilisation du dispositif de manutention pour la mise en place de dispositifs quelconques dans un réacteur nucléaire de type quelconque.

De façon plus générale, le dispositif de manutention suivant l'invention peut être utilisé pour la mise en place et la récupération d'équipements quelconques dans des enceintes étanches différentes d'un réacteur nucléaire. On peut par exemple imaginer son utilisation pour la mise en place puis l'extraction après usage d'appareillages ou outillages divers, dans des cellules de stockage, des boîtes à gants, des cellules chaudes, des enceintes de formes quelconques renfermant un produit toxique, dans toute industrie telle que l'industrie nucléaire, l'industrie chimique ou la métallurgie.

## Revendications

1. Dispositif de manutention pour introduire et extraire un appareillage (13) à travers un orifice d'une enceinte étanche comportant un moyen de manutention classique, tel qu'un treuil associé à un ensemble d'introduction destiné à coopérer avec un passage cylindrique (7) traversant la paroi (2) de l'enceinte au niveau de l'orifice qui est obturé par un bouchon cylindrique (8) coopérant avec un moyen de fermeture étanche du passage cylindrique (7) manoeuvrable pour l'ouverture de l'orifice, le dispositif comportant de plus un piston monté mobile et étanche à l'intérieur d'un cylindre pour réaliser l'introduction et l'extraction de l'appareillage, caractérisé par le fait que l'ensemble d'introduction comporte :

le cylindre constitué par un tube (10) dont le diamètre intérieur est supérieur au diamètre du passage de traversée (7) et dont la surface interne est soigneusement usinée et calibrée, comportant à l'une de ses extrémités, ou extrémité de sortie, des moyens de liaison (35, 38) permettant de relier l'extrémité de sortie du tube (10) à l'extrémité d'entrée (7b) du passage de traversée,

le piston (11) comportant à son extrémité dirigée vers l'extrémité d'entrée du tube (10) un organe de liaison (14) au moyen de manutention (54) et à son autre extrémité un second organe de liaison (16), pour la fixation de l'appareillage (13) sur le piston (11),

et l'appareillage (13) lui-même ayant une enveloppe externe cylindrique dont le diamètre est inférieur à celui du bouchon (8) dans sa partie courante, une partie d'extrémité (17) élargie et un moyen d'accrochage de l'extrémité externe du bouchon (8), à son extrémité opposée au piston (11), ledit moyen d'accrochage du bouchon (8) à l'extrémité de l'appareillage (13) permettant son déverrouillage introduction dans l'enceinte étanche avec l'appareillage (13), la partie de jonction entre la partie d'extrémité élargie (17) de l'appareillage (13) et son enveloppe constituant une portée d'appui tronconique destinée à coopérer avec une portée de support correspondante dans le passage (7), lorsque l'appareillage (13) est en position de service dans l'enceinte étanche, une partie calibrée et rectifiée (13') de la surface externe de l'appareillage (13) coopérant alors avec les joints d'étanchéité (20) du passage (7), pour procurer une fermeture étanche du passage (7), dans la position de service de l'appareillage (13).

2. Dispositif de manutention suivant la revendication 1, caractérisé par le fait que le piston (11) comporte un moyen (47) permettant de le verrouiller sur l'extrémité d'entrée du tube (10)

3. Dispositif de manutention suivant l'une quelconque des revendications 1 et 2 caractérisé par le fait que le tube (10) comporte, au voisinage de son extrémité de sortie, des ouvertures (40) de part et d'autre desquelles, dans la direction axiale, sont disposés des joints d'étanchéité (43, 44) et un fourreau de fermeture (41) mobile entre une position de fermeture dans laquelle ce fourreau coopère avec les joints (43 et 44) pour fermer les ouvertures (40) de façon étanche et une position d'ouverture dans laquelle le fourreau (41) laisse les ouvertures (40) accessibles depuis l'extérieur du tube (10) pour le démontage de l'un au moins des moyens de liaison du piston.

4. Dispositif de manutention suivant l'une quelconque des revendications 1 et 2 caractérisé par le fait que l'enceinte étanche est un réacteur nucléaire à neutrons rapides et que l'appareillage (13) est un dispositif de visualisation des têtes d'assemblages combustibles du réacteur nucléaire, pendant les opérations de rechargement.

5. Dispositif de manutention suivant la revendication 4, caractérisé par le fait que l'appareillage (13) comporte un moyen de protection biologique arrêtant le rayonnement du réacteur nucléaire pendant la manutention et lorsque l'appareillage (13) est mis en place dans le réacteur nucléaire.

## Claims

1. Handling equipment for introducing and removing an apparatus (13) through an opening in a sealed enclosure, comprising conventional handling means such as a winch combined with an insertion unit intended to cooperate with a cylindrical passage (7) passing through the wall (2) of the enclosure at the level of the opening, which is sealed off by means of a cylindrical stopper (8) cooperating with means for sealing the cylindrical passage (7) which can be manoeuvered in order to free the opening, the equipment futher comprising a piston which is movably mounted in leak tight manner inside a cylinder in order to insert and remove the apparatus, characterised in that the insertion unit comprises :

the cylinder consisting of a tube (10) the internal diameter of which is greater than the diameter of the through-opening (7) and the internal surface of which is carefully machined and calibrated, comprising at one of its ends, or the exit end, connecting means (35, 38) adapted to connect the exit end of the tube (10) to the entry end (7b) the through-opening,

the piston (11) comprising at its end directed towards the entry end of the tube (10) connecting means (14) for connecting to the handling equipment (54) and to the other end thereof a second connecting member (16), for securing the apparatus (13) to the piston (11),

and the apparatus (13) itself having a cylindrical outer casing the diameter of which is less than that of the stopper (8) in its continuous part, a widened end portion (17) and means for securing the outer end of the stopper (8), at its end opposite the piston (11), said means for securing the stopper (8) to the end of the apparatus (13) enabling it to be released and inserted into the sealed enclosure with the apparatus (13), the junction portion between the widened end portion (17) of the apparatus (13) and its casing forming a frustoconical bearing surface intended to cooperate with a corresponding bearing surface in the passage (7), when the apparatus (13) is in the operative position in the sealed enclosure, a calibrated and an straightened portion (13') of the outer surface of the apparatus (13) then cooperating with sealing joints (20) of the passage (7), in order to ensure that the passage (7) is sealed in leak tight manner in the operative position the apparatus (13).

2. Handling equipment according to claim 1, characterised in that the piston 11 comprises means (47) for locking it to the entry end the tube (10).

3. Handling equipment according to either of claims 1 and 2, characterised in that the tube (10) comprises, in the vicinity of its exit end, openings (40) on each side of which there are provided, in the axial direction, sealing joints (43, 44) and a closure sleeve (41) which is movable between a closed position in which this sleeve cooperates with the joints (43 and 44) in order to close off the openings (40) in leak tight manner and an open position in which the sleeve (41) leaves the openings (40) accessible from the outside of the tube (10) for the purpose of dismantling at least one of the connecting means for the piston.

4. Handling equipment according to either of claims 1 and 2 characterised in that the sealed enclosure is a fast neutron nuclear reactor and the apparatus (13) is a means for observing the heads of the fuel assemblies of the nuclear reactor during reloading operations.

5. Handling equipment according to claim 4, characterised in that the apparatus (13) comprises biological protection means which stop the radiation of the nuclear reactor during handling and when the apparatus (13) is in position in the nuclear reactor.

## Patentansprüche

1. Handhabungseinrichtung zum Einführen und Herausziehen einer Apparatur (13) durch eine Öffnung in einem dichten Gehäuse, mit einer herkömmlichen Handhabungseinrichtung von der Art, daß eine Winde mit einer Einführungskonstruktion verbunden ist, die für das Zusammenwirken mit einem die Seitenwand (2) des Gehäuses auf dem Niveau einer Öffnung durchdringenden zylindrischen Durchlaß (7) ausgebildet ist, wobei die Öffnung mit einem zylindrischen Stopfen (8) abgedichtet wird, der mit einer zum Öffnen der Öffnung betätigbaren dichten Verschlußeinrichtung des zylindrischen Durchlasses zusammenwirkt, und mit einem beweglichen und in bezug auf das Zylinderinnere dichten Kolben, mit dem das Einführen und Herausziehen der Apparatur bewerkstelligt wird, dadurch gekennzeichnet, daß die Einführungskonstruktion

einen aus einer Röhre (10) gebildeten Zylinder, deren Innendurchmesser größer ist als der Durchmesser des durchdringenden Durchlasses (7), deren Innenoberfläche sorgfältig hergestellt und kalibriert ist und die an einem ihrer Enden, dem Auslaßende, eine Verbindungseinrichtung (35, 38) aufweist, mittels der das Auslaßende der Röhre (10) mit dem Einlaßende (7b) des durchdringenden Durchlasses verbunden werden kann, und

einen Kolben (11) aufweist, der an seinem zum Auslaßende der Röhre (10) gerichteten Ende eine Einrichtung (14) für die Verbindung mit der Handhabungseinrichtung (54) und an seinem anderen Ende eine zweite Verbindungseinrichtung (16) für die Befestigung der Apparatur (13) an dem Kolben (11) aufweist, und

die Apparatur (13) selbst eine äußere zylindrische Ummantelung, deren Durchmesser kleiner ist als derjenige des Stopfens (8) in dessen beweglichem Abschnitt, einen aufgeweiteten Endabschnitt (17) und eine Mitnahmeeinrichtung für das äußere, dem Kolben (11) entgegengesetzte Ende des Stopfens (8) aufweist, wobei die Mitnahmeeinrichtung des Stopfens (8) am Ende der Apparatur (13) dessen Freigabe und Einführung in das dichte Gehäuse mittels der Apparatur (13) ermöglicht, wobei der Verbindungsabschnitt zwischen dem Abschnitt des aufgeweiteten Endes (17) der Apparatur (13) und deren Ummantelung eine kegelstumpfartige Auflagefläche bildet, die für das Zusammenwirken mit einer entsprechenden Abstützfläche im Durchlaß (7) ausgebildet ist, wenn die Apparatur (13) im dichten Gehäuse in Betriebsposition ist, um wobei anschließend ein kalibrierter und feingeschliffener Bereich (13') der äußeren Oberfläche der Apparatur (13) mit Dichtungsringen (20) des Durchlasses (7) Zusammenwirkt, um in der Betriebsposition der Apparatur (13) einen dichten Verschluß des Durchlasses (7) zu schaffen.

2. Handhabungseinrichtung gemäß Anspruch 1, dadurch gekennzeichnet, daß der Kolben (11) eine Einrichtung (47) aufweist, mit der die Verriegelung desselben am Einlaßende der Röhre (10) ermöglicht wird.

3. Handhabungseinrichtung gemäß einem der Ansprüche 1 und 2, dadurch gekennzeichnet, daß die Röhre (10) in der Nähe ihres Auslaßendes Öffnungen (40), an deren beider Seiten in axialer Richtung Dichtungsringe (43, 44) angebracht sind, und eine Verschlußhülse (41) aufweist, die zwischen einer Verschlußposition, in der diese Hülse mit den Dichtungsringen (43, 44) zusammenwirkt, um die Öffnungen (40) dicht zu verschließen, und einer geöffneten Position, in der die Hülle (41) die Öffnungen (40) vom Äußeren der Röhre (10) her zugänglich beläßt, damit wenigstens eine der Verbindungseinrichtungen des Kolbens abgenommen werden kann, beweglich ist.

4. Handhabungseinrichtung gemäß einem der Ansprüche 1 und 2, dadurch gekennzeichnet, daß das dichte Gehäuse ein Kernreaktor mit schnellen Neutronen ist und die Apparatur (13) eine Einrichtung für die Betrachtung der Brennstoffkassetenoberteile eines Kernreaktors während des Aufladungsbetriebes ist.

5. Handhabungseinrichtung gemäß Anspruch 4, dadurch gekennzeichnet, daß die Apparatur (13) eine Hohlraumschutzeinrichtung aufweist, die die Strahlung des Kernreaktors während der Handhabung und dann, wenn die Apparatur (13) in den Kernreaktor eingeführt ist, abhält.

FIG.1B

FIG.1A

FIG.2a

FIG.2

FIG.3

FIG.5

EP 0 218 485 B1

FIG.4a

FIG.4b

4

FIG.4c

FIG.4d

FIG.4e

FIG.4f